# EUROPEAN PATENT APPLICATION

(11) **EP 2 393 150 A1**
(43) Date of publication of application: **07.12.2011**
(21) Application number: 10405111.5
(22) Date of filing: 01.06.2010
(51) Int. Cl.: H01M 10/39, H01M 10/48, H01M 10/50

(54) **High temperature rechargeable electrochemical energy storage cell**

(71) Applicant: Battery Consult Sagl, 6839 Sagno (CH)
(72) Inventor: Dustmann, Cord-Henrich, 6839 Sagno (CH)
(74) Representative: Frei Patent Attorneys

(57) **Abstract**

The invention relates to a high temperature rechargeable electrochemical energy storage cell (1) comprising a cell case (2) which accommodates:
a. an anode arrangement (10) containing a molten alkali metal anode (11);
b. a cathode unit (20) containing at the operating temperature of the energy storage cell and when the energy storage cell is at least partially in a charged state:
● a cathode (22) which is electronically conductible;
● a cathode current collector (21) being electrically connected to the cathode (22);
● a separator separating (23) the anode (11) from the cathode (22), the separator (23) being a solid electrolyte and comprising a solid conductor of the ions of the alkali metal of the anode (11) or being a micro-molecular sieve which contains said alkali metal adsorbed therein, and the separator (23) being non-conductive for electrons.

The invention is characterized in that at least two cathode units (20) are assembled within the energy storage cell case (2), and the at least two cathode units (20) are in electrochemical contact with a shared molten anode (11) of the anode arrangement (10) via the separator (23).

## Description

### FIELD OF THE INVENTION

The invention relates to a high temperature rechargeable electrochemical energy storage cell comprising a cell case which accommodates:
a. an anode arrangement containing, at the operating temperature of the energy storage cell and when the energy storage cell is at least partially in a charged state, a molten alkali metal anode;
b. a cathode unit containing at the operating temperature of the energy storage cell and when the energy storage cell is at least partially in a charged state:
   ● a cathode which is electronically conductible;
   ● a cathode current collector being electrically connected to the cathode;
   ● a separator separating the anode from the cathode, the separator being a solid electrolyte and comprising a solid conductor of the ions of the alkali metal of the anode or being a micro-molecular sieve which contains said alkali metal adsorbed therein, and the separator being non-conductive for electrons.

The invention further comprises a cathode unit for an energy storage cell and a method of measuring the charge state of the energy storage cell.

### BACKGROUND OF THE INVENTION

High temperature rechargeable electrochemical energy storage cells which use for example Beta double prime-alumina as a separator and as a solid electrolyte are well known. The patent publications US 5 158 839, US 5 763 117, US 6 428 585, EP 1 363 343 and EP 1 296 392 describe the concept of such an energy storage devices and methods of producing such energy storage cells. Furthermore the concept of a specific embodiment of a high temperature rechargeable electrochemical energy storage cell is described in the article *"*Secondary Batteries - High Temperature Systmes / Safty", which was originally published in Encyclopedia of Electrochemical Power Sources published by Elsevier Amsterdam, Vol. 4, 2009, p. 324-333.

In all these cases the batteries are comprised of single cells each with exact one cathode compartment, exact one anode compartment, a beta double prime alumina solid electrolyte as the separator between the cathode and the anode compartment and a cell case which accommodates all these parts. Such energy storage cells are e.g. used to create very large stationary batteries with a high capacity.

The disadvantage of all these known concepts is the use of single cells each with seals, cases and cell connectors which cannot be sized up for performance reasons and are very complex and expensive in production.

### DESCRIPTION OF THE INVENTION

It is therefore the task of the invention to simplify the design and to reduce the number of components to the functional minimum by using specific stationary advantages. This object is achieved by the features of the independent claims 1, 13 and 15. Further preferred embodiments are evident from the dependent patent claims.

The invention is characterized in that at least two cathode units are assembled within the energy storage cell case and the at least two cathode units are in electrochemical contact with a common molten anode of the anode arrangement via the separator. Preferably each of the cathode units forms a positive pole and the anode arrangement forms one negative pole. The positive poles of the cathode current collectors of the cathode units are electrically connected to a shared cathode bus bar. The cathode bus bar preferably rests on the positive poles of the cathode current collector. They can e.g. be in the form of pins, e.g. vertical aligned pins. Hence, the cathode bus bar can be carried by a plurality of such (vertical) pins.

The cell case of the energy storage cell comprises side walls and a bottom and is preferably made of metal, particularly of aluminum. The cell case top lid is also preferably made of a metal, e.g. aluminum.

The anode arrangement preferably comprises an anode current collector for each of the at least two cathode units. The anode current collector is particularly in the form of a casing with a cavity which accommodates the cathode unit. The anode current collectors are electrically connected to an anode bus bar, preferably to the bottom of the cell case. The anode current collector has preferably a closed lower end and can be tube-shaped, i.e. cylindrical. Furthermore, within the cavity of the anode current collector casing, preferably an anode compartment is formed. Said anode compartment is advantageously formed between the anode current collector casing, i.e. the cavity wall, and the cathode unit, i.e. the outer circumference of the cathode unit accommodated in the cavity of said casing. The cavity of the anode current collector casing is preferably adapted to the shape of the cathode unit. Said cavity is particularly adapted to the shape of the cathode unit such that the said anode compartment comprises a ring-shaped gap between said casing and the cathode unit. The ring-shaped gap preferably forms a capillary gap, in which the molten anode material rises against the gravitational force by means of capillary forces under operational conditions of the energy storage cell. The cathode unit is preferably supported on its lower end in the cavity of the anode current collector by means of a support. However, the cathode unit is preferably only inserted into the cavity of the anode current collector but not rigidly connected to latter. Of course, means for positioning, alignment and stabilisation of the cathode unit within the cavity of the anode current collector can be provided.

The anode current collector has at least four important functions: 1. the anode current collector conducts the electrical current from the anode to the anode bus bar; 2. the anode current collector is a casing which accommodates the cathode unit; 3. the anode current collector forms together with the cathode unit a (capillary) gap for the molten anode to rise; 4. the anode current collector dissipates heat produced within the cathode; 5. the anode current collector is a mechanical support in positioning of the cathode unit within the cell case, also under the aspect of thermal-shrinkage.

The energy storage cell advantageously contains a plurality of cell sub-units, each composed of an anode current collector and a cathode unit, which are arranged within the cell case. In cross-view the cell case of the energy storage cell can be round, oval rectangular or in general polygonal, e.g. hexagonal or octagonal. The cell sub-units are preferably densely packed within the cell case.

The cathode unit is preferably tube-shaped, i.e. cylindrical with a closed lower end. The lower end of the cathode unit is preferably calotte-shaped. The solid separator, which also forms a solid electrolyte for the energy storage cell, preferably forms an outer casing of the cathode unit at least in the area where the cathode unit is in contact with the molten anode. The separator particularly forms a cavity which serves as a cathode compartment.

In a preferred development of the invention the cathode unit contains at the operating temperature of the energy storage cell:
- an alkali metal aluminum halide molten salt secondary electrolyte;
- a cathode which is electronically conductible and electrolyte-permeable, and which is impregnated with said molten salt secondary electrolyte.

The cathode, the cathode current collector and optionally the alkali metal aluminum halide molten salt secondary electrolyte are preferably arranged in the cathode compartment formed by the solid separator. The cathode current collector is preferably integrated in the solid cathode.

In a further development of the invention, the cathode preferably comprises an electronically conductible electrolyte-permeable cathode matrix containing an active cathode substance. The cathode matrix preferably being also impregnated with said molten secondary electrolyte. The cathode matrix can be made of said active cathode substance or said active cathode substance can be dispersed in the cathode matrix. The cathode matrix is preferably porous and solid. Hence, the cathode compartment accommodates a cathode current collector, a cathode matrix with an active cathode substance and optionally an alkali metal aluminum halide molten salt electrolyte. The cathode current collector is preferably integrated in the cathode matrix.

The mentioned molten salt is a secondary electrolyte which provides the conduction of the alkali metal anode ions between the inner surface of the separator and a reaction point inside the cathode. However, during normal charge-discharge operation this secondary liquid electrolyte does not participate in the main electrochemical charge-discharge reaction.

The cathode current collectors of the at least two cathode units are connected to a cathode bus bar through which electric current is conducted from an external conductor to the cathode current collectors (charge of the energy storage cell) or is conducted from the cathode current collectors to an external conductor (discharge of the energy storage cell). The cathode bus bar can be in the form of a disk, which is arranged above, i.e. at the top of the assembly of the cell sub-units within the cell case. Above the cathode bus bar the cell case top lid is arranged. The cathode bus bar is connected to a plus pole outside the cell case via an isolated current lead through.

The cathode units, particularly the cathode compartments of the cathode units, are individually sealed. I.e. the cathode units are not in a direct electrochemical contact with each other. They are only via the shared anode indirectly electrochemical connected. Hence, the cathode units do not share the cathode, the cathode current collector, the solid electrolyte or the secondary electrolyte with each other.

In preferred embodiment of the cathode unit, a sealing ring, preferably made of alpha alumina, is sealed with its lower part to the ring shaped upper end of the solid separator of the cathode unit by means of a glass joint. The sealing ring is sealed with its upper part to a metal ring via a glass joint as well. On the metal ring a cathode unit top lid made of metal is welded and hermetically seals the cathode compartment. The cathode current collector is lead through the cell case top lid and can be connected to the cathode bus bar. Each of the cathode units of the energy storage cell preferably contains a fuse for interrupting the current flow through the cathode current collector in case of a short-circuit, an overload or generally a failure of the cathode unit. The fuse can be provided outside or inside the sealed cavity of the cathode unit. In comparison to solutions in the state of the art, the components of present cathode unit do not have to be additionally sealed with a cell case.

The cathode unit is preferably a prefabricated assembly comprising the mentioned components: the cathode current collector, the cathode (particularly a cathode matrix with an active cathode substance) and optionally a secondary electrolyte and the separator.

The anode arrangement advantageously further comprises an anode bus bar made of a low resistive material through which the electric current is conducted from an external conductor to the anode (discharging of the cell) or is conducted from the anode to an external conductor (charging of the cell). Said anode bus bar is preferably formed by the bottom of the cell case.

The cell case advantageously accommodates a plurality, i.e. at least two, anode current collector casings with a cavity, each of which accommodates a cathode unit. Between the anode current collector casings and/or between the anode current collector casings and the cell case at least one, preferably a plurality of cell case sub-compartments are formed. The cell case sub-compartments can be independent from each other or can be interconnected with each other. Advantageously at least groups of a plurality of cell case sub-compartments, and preferably all of the cell case sub-compartments are interconnected with each other. In an at least fully charged state of the energy storage cell the cell case sub-compartments accommodate molten anode material. The anode current collector casings contain, preferably at their closed lower end, one or more passages, which connect the cell case sub-compartments with the anode compartments. The interconnected cell case sub-compartment are characterized in that they have the same level of molten anode material. Hence, the molten anode material can freely circulate between the cell case sub-compartments either via direct connections between the cell case sub-compartments or via the passages in the anode current collector casings.

The free volume above the molted anode material, i.e. above the cell case sub-compartments within the cell case is preferably filled with inert gas. Means can be provided to supply inert gas into the cell case or to deflate inert gas from the cell case.

In a specific aspect of the present invention the charge state of the energy storage cell is determined based on the behavior of the inert gas during a change of the charge state. In different stages of charge the amount of liquid anode material within the anode arrangement, particularly within the cell case sub-compartments, varies. In a fully charged state of the energy storage cell the level of molten anode material within the cell case sub-compartments is at highest whereas in a discharged state of the energy storage cell the molten anode material is at its lowest level. The changing level of molten anode material within the cell case sub-compartments during charging and discharging of the energy storage cell also changes the free volume above the molten anode level, which is filled with inert gas.

According to a first alternative, the volume of the inert gas within the cell case is held constant. Therefore, a change in the level of the molten anode material causes a change of the free volume in the cell case above this level and hence a pressure change of the inert gas. Means for measuring the pressure, i.e. the mentioned pressure change of the inert gas within the cell case are provided. Further, means are provided to calculate the charge state of the energy storage cell from the measured inert gas pressure change. The calculation is based on well known formulas which express e.g. the relationship between charge state of the energy storage cell and the amount of molten anode material within the cell, the relationship between the amount of molten anode material within the cell and the level of the molten anode material within the cell case, respectively the volume occupied by the anode material, the relationship between the level of the molten anode material within the cell case, respectively the volume occupied by the anode material, and the free volume occupied by the inert gas above the level of molten anode material, and the relationship between the free volume and the pressure of the inert gas.

According to a second alternative, the pressure of the inert gas within the cell case is held constant. To keep the pressure of the inert gas constant during a change of charge of the energy storage cell, inert gas has to be supplied to or deflated from the cell case during a change of charge of the energy storage cell. Therefore means are provided to supply inert gas to or to deflate inert gas from the cell case and to measure the amount, i.e. the volume of the supplied or deflated inert gas. Furthermore a compensating reservoir can be provided which accommodates excessive inert gas from the cell case. The measured amount, i.e. the volume, of inert gas supplied to or deflated from the cell case is indirectly dependent from the change of charge of the energy storage cell. Hence, means are provided to calculate the charge state of the energy storage cell from the measured inert gas pressure. The calculation is based on well known formulas which express e.g. the above mentioned relationships. As a difference to the first alterative, the change of volume of inert gas is directly included into the relationship between the level of the molten anode material within the cell case, respectively the volume occupied by the anode material, and the free volume occupied by the inert gas above the level of molten anode material, and has not to be calculated via the detour of the inert gas pressure.

It is also possible that a combination of the above mentioned alternatives is applied to calculate the charge state of the cell. I.e. a pressure change and a change of gas volume occurs as well during a change of the charge state of the cell.

According to another preferred development of the invention, means for cooling the energy storage cell are provided. According to a first embodiment, the cooling means comprise cooling pipes which are attached in a thermally conductive manner, particularly welded, to the bottom of the cell case on the outside. Within the pipes a cooling medium circulates, e.g. a liquid, a gas or a fluid which changes between liquid and gas phase during the heat exchanging process. According to second alternative or additional embodiment, the cooling means are cooling fins which are attached in a thermally conductive manner, preferably welded, to the bottom of the cell case on the outside. Between the cooling fins a cooling gas is circulated which dissipates the heat from the cooling fins. The cooling fins or the cooling pipes are preferably made of a thermally well conductive material, as e.g. metal and in particular copper or aluminum. The cooling fins or the cooling pipes are preferably made of the same material as the bottom of the cell case. Both the cooling pipes and the cooling fins can be part of a heat exchange device, with which energy can be recovered from the dissipated heat.

The invention further comprises a cathode unit for an energy storage cell according to the present invention. The cathode unit is a prefabricated assembly comprising a cathode current collector, a cathode, particularly a matrix with an active cathode substance, optionally a secondary electrolyte, and a separator encasing the cathode and the cathode current collector. The separator of the cathode unit is formed as a casing with a cavity and a closed lower end. The cavity accommodates the cathode current collector, the cathode, particularly a cathode matrix with an active cathode substance, and optionally a secondary electrolyte. The separator casing is preferably in the form of a tube with a closed lower end. The lower end of the separator is preferably calotte-shaped. The form of the cavity of the separator casing preferably matches exactly with the form of the cathode matrix, so that the separator casing tightly accommodates the cathode.

In a preferred embodiment of the present energy storage cell the alkali metal anode contains or consists of Sodium (Na). The separator is preferably made of or contains Beta-alumina (β-alumina) and most preferably Beta double prime-alumina (β"-alumina). The separator can also be made of a Nasicon membrane. The alkali metal aluminium halide molten salt electrolyte has preferably the chemical formula MAlHal₄; whereas M: is the alkali metal of the anode, preferably Sodium, whereas Hal is a Halide, preferably Chlorine (Cl). Hence the secondary electrolyte is preferably NaAlCl₄. During operation the molten salt MAlHal₄ of the secondary electrolyte is dissociated into M⁺ and AlHal₄⁻ ions.

The active cathode substance is preferably a chemical substance with the formula: THal₂; whereas T is Transition metal, selected from the group of transition metals consisting of Fe, Ni, Co, Cr, Mn and mixtures thereof, whereas Hal is a Halide of the electrolyte. T is preferably Fe, Ni or a mixture thereof and Hal is preferably Chlorine (Cl).

The chemical reactions within the energy storage cells are the following:

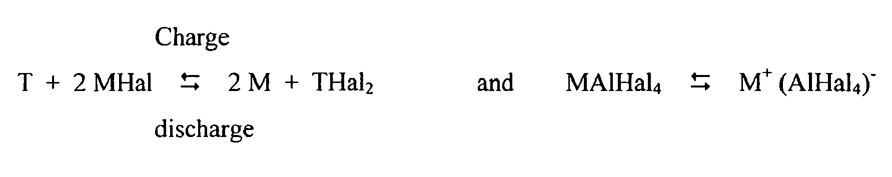

The energy storage cells according to the invention are preferably applied in stationary applications, e.g. as a buffer storage in a power supply system. Today's power supply systems are more and more supplied with alternative energy produced for example by wind power plants, photovoltaic-plants or hydroelectric power plants. These kind of power plants which produce environmental-friendly electrical energy have the disadvantages, that the production of the electrical energy is often fluctuating and depending on environmental conditions, as e.g. wind, sunshine, flow conditions in rivers etc., which can not be influenced. Hence, alternative electrical energy often can not be produced dependent on the demand but only dependent on the prevailing environmental conditions. Furthermore a highly fluctuating production of electrical energy, as it is e.g. the case with wind energy, can jeopardize the grid stability and hence can be responsible for the dreaded black-outs.

High temperature rechargeable electrochemical energy storage cells according to the invention, which are integrated in a power supply system, can now be used to store excess energy, which is not used when it is produced and which can be supplied to the system when electrical energy is demanded. Further the energy storage cells can serve as a buffer between the power plant(s) and the power network and hence are able to level out a (highly) fluctuating energy production.

The patent publication WO 2007/104167 describes for example a method for operating a battery energy storage system used in an electric power supply system as a balancing reserve in order to response to imbalances between generation and consumption of electrical energy. The present energy storage cell according to the invention is now applicable in such an electric power supply system as a balancing reserve or buffer storage to respond to sudden imbalances between the generation and consumption that follow unexpected loss of generating units or transmission lines, as well as the daily load forecast errors. The energy storage cell can be applied alternative to or in addition to other systems, e.g. thermal and hydroelectric generators, which normally provide a balance reserve and are synchronized with the grid or electric power transmission/distribution network.

### BRIEF DESCRIPTION OF THE DRAWINGS

The subject matter of the invention will be explained in more detail in the following text with reference to preferred exemplary embodiments which are illustrated in the attached drawings, in which the following figures show:
- Figure 1: a cross-sectional view of an energy storage cell according to the invention;
- Figure 2: a cross sectional view of a cathode unit according to the invention;
- Figure 3: a first embodiment of an energy storage cell design in cross-sectional view from above;
- Figure 4: a second embodiment of an energy storage cell design in cross-sectional view from above;
- Figure 5: a side view of an arrangement of a plurality of energy storage cells connected in series;
- Figure 6: a larger scale cut-out of a cathode tube according to figure 1;
- Figure 7a, 7b: a side view of alternative embodiments of inert gas port devices.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

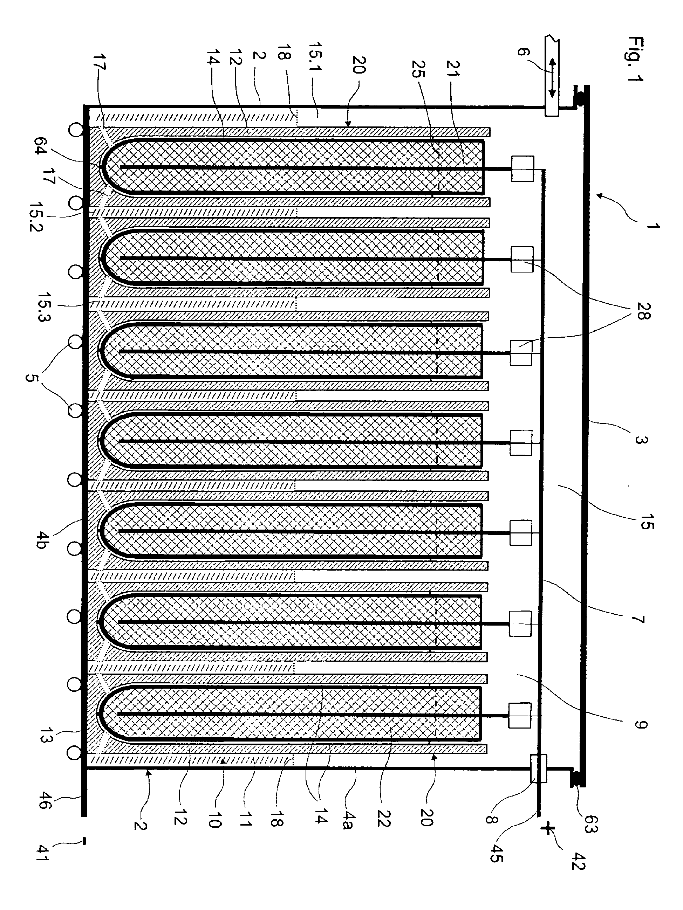

In the present examples according to figure 1 to 7 the alkali metal anode consists of Sodium (Na). The separator is made of beta double prime-alumina (β"-alumina). The alkali metal aluminium halide molten salt electrolyte has the chemical formula NaAlCl₄. The active cathode substance is a mixture of the chemical substances with the formula: FeCl₂ and NiCl₂. However, it is also possible to apply different appropriate chemical compositions in connection with the description of the figures.

Figure 1 schematically shows an energy storage cell 1 according to the invention with a cell case 2 made of metal, e.g. aluminum. The cell case 2 comprises a cell case bottom 4b and a cell case wall 4a, which together form a cell case body. The cell case body forms a compartment 15. The compartment 15 accommodates an anode arrangement 10 and a plurality of cathode units 20. The cell case body is closed with a cell case top lid 3, e.g. made of metal, like aluminum. The cell case top lid 3 is preferably releasable attached to the cell case body, e.g. by means of a detachable connection. If the cell case top lid 3 is releasable connected to the cell case, the energy storage cell can be opened at any time e.g. to exchange defect cathode units with new cathode units or to carry out other maintenance work. The connection between the cell case 2 and the cell case top lid 3 is preferably sealed by means of a sealing strip 63.

The cell case body can be made of one piece, e.g. by means of casting, or can be assembled of several parts, with e.g. one or more wall parts and one or more bottom parts, which are joined together, e.g. by means of welding.

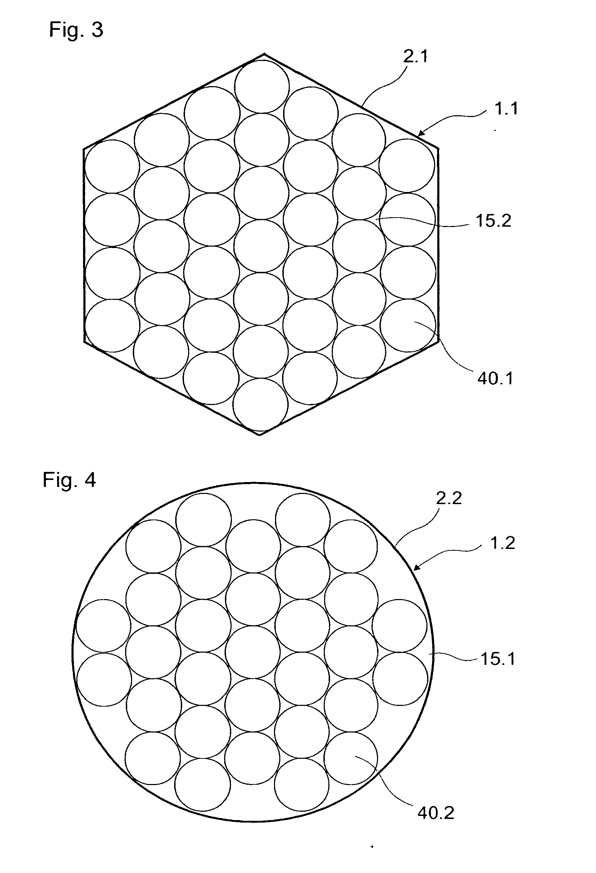

The described construction of the cell case 2 allows a convenient assembly of the energy storage cell I from the top. The cell case bottom 4 is made in thick low resistive material, e.g. metal, preferably aluminium, and also serves as the anode bus bar 13. The cell case can have a hexagonal cross-sectional shape 2.1 (see figure 3) or a round, particularly a circular cross-sectional shape 2.2 (see figure 4). The sub-units 40.1, 40.2 of anode current collector 12 and cathode unit 20 are densely packed within the cell case 2.

The cell case compartment 15 accommodates a plurality cathode units 20. Furthermore the cell case compartment 15 accommodates a plurality of anode current collectors 12, namely for each cathode unit 20 one anode current collector 12, which form together a cell-sub-unit 40.1, 40.2. The space 15.2...15.3 between the single anode current collectors 12 and the space 15.1 between the anode current collectors 12 and the cell case walls 4a is composed of cell case sub-compartments 15.1...15.3, which are interconnected and which accommodates molten sodium 11 at least in the fully charged state of the energy storage cell 1. For visual reasons not all cell case sub-compartments are designated with a reference number. Hence, the cell case sub-compartments 15.1...15.3 form the sodium reservoir with a variable filling height 18 dependent on the charge state.

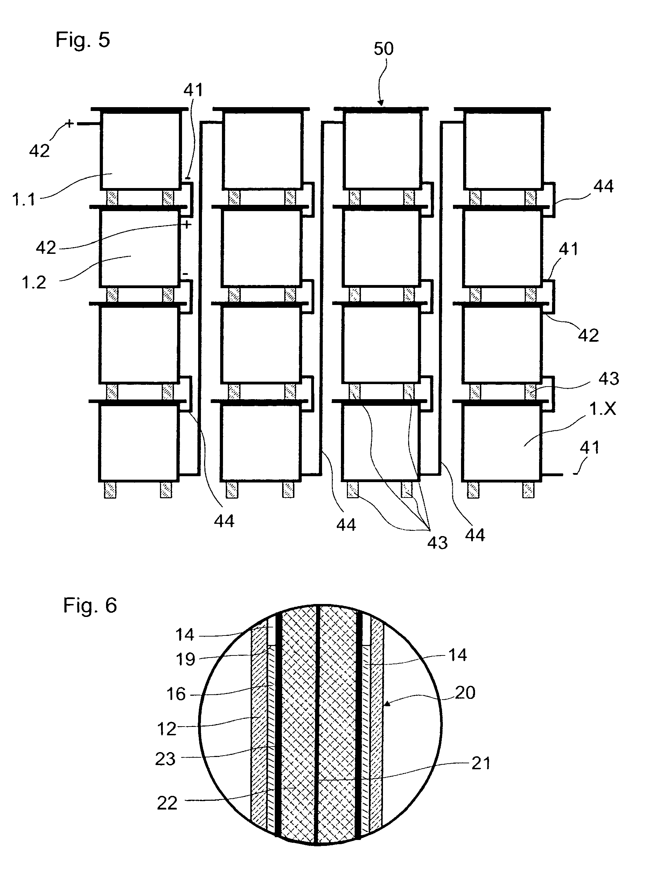

The anode current collector 12 is in the form of a casing with a cavity, into which the cathode unit 20 is introduced. The anode current collector 12 has a closed lower end. The cavity of the anode current collector 12 is adapted to the shape of the cathode unit 20, in such a way that between cathode unit 20 and the cavity wall of the anode current collector a gap, preferably a capillary gap, is formed which serves as anode compartment 14 (see also figure 6). The anode compartment 14 comprises a ring-shaped gap section, which surrounds the separator 23 of the cathode unit 20. The anode compartment 14 accommodates molten sodium 11, which is in an electrochemical interaction with the cathode unit 20 during the operation of the energy storage cell 1. The cathode unit 20 is supported on its lower end in the cavity of the anode current collector 12 by means of a support 64. However the cathode unit 20 and the anode current collector 12 are arranged relative to each other such and the anode compartment between the anode current collector 12 and the cathode unit 20 is formed such that the unrestricted thermal expansion of the both the anode current collector 12 and the cathode unit is ensured without disturbing each other. This is achieved with a construction according to which the cathode unit 20 is only inserted into the anode current collector 12 but not rigidly coupled to the anode current collector 12.
The anode current collector 12 is made of a low resistive, i.e. electro-conductive, material, e.g. metal, preferably aluminium.

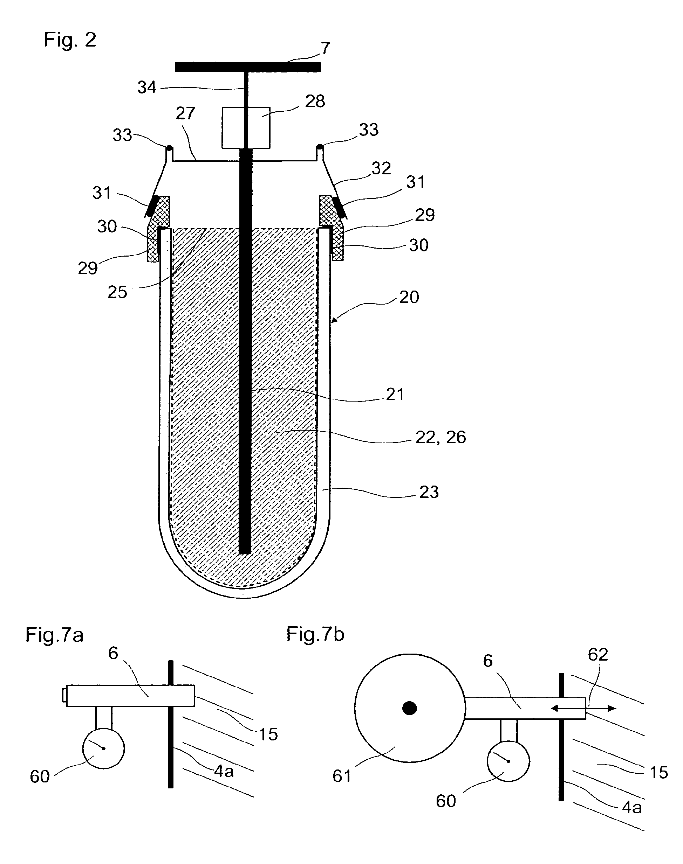

The cathode unit 20 is tube shaped, i.e. cylindrical, with a closed lower end which is calotte-shaped. In figure 1 the cathode units 20 are only adumbrated. The detailed construction of the cathode unit 20 is shown in figure 2, which is referred to for more details. The anode current collector 12 is tube-shaped as well. At its closed lower end, the anode current 12 collector contains passages 17, which connect the cell case sub-compartments 15.1...15.3 with the anode compartments 14, so that the molten sodium 11 can freely circulate and be exchanged between the cell case sub-compartments 15.1...15.3 and anode compartments 14. As the cell case sub-compartments 15.1...15.3 are interconnected at least via the passages 17 in the anode current collectors 12, the sodium level 18 within the single sub-compartments 15.1...15.3 is always the same.

The molten sodium 11 rises within the anode compartment 14 by means of capillary forces and/or with the assistance of a wicking material 16 against the gravitational force to a molten anode level 19, which is higher than the molten anode level 18 in the cell case sub-compartments 15.1...15.3 at least in an almost discharged state of the energy storage cell 1 (see figure 6). This way a large electrochemical active surface on the cathode unit 20 is covered with sodium 11. The mentioned wicking material 16 is used for supporting the sodium wicking within the anode compartment 14 and can be applied to compensate production tolerances, which otherwise would lead to a malfunction of the capillary action. The wicking material can comprise a carbon material. The wicking material 16 can particularly be a carbon felt.

The anode current collectors 12 for each cathode unit 20 are joined in a low resistive way, i.e. electro-conductive, to the anode bus bar 13 which forms also the bottom of the cell case 2. The sub-units 40.1, 40.2 of anode current collector 12 and cathode unit 20 are preferably introduced into the cell case 2 in the most dense packing, so that the energy storage cell 1 has a high capacity.

Each cathode current collector 21 of the cathode units 20 is connected to a shared cathode bus bar 7 via a fuse 28 which disconnects single cathode units 20 from other cathode units 20 and from the cathode bus bar 7 in case of a failure of e.g. the beta double prim-alumina separator, because such a failure is low resistive.

The cathode bus bar 7 is in the form of a disk and connects all cathode units 20. The cathode bus bar is joined to an external current connection via a current lead through 8 which passes the cell case 2. The cathode bus bar forms the plus pole 42.

Cooling pipes 5 are attached to the outside of the bottom 4b of the cell case 2 in a heat-conducting manner. Heat, which is generated inside the cathode unit 20, is dissipated by heat conduction via the anode material and the anode current collectors 10 and via the anode bus bar 13, i.e. via the bottom 4b of the cell case, to the cooling pipes 5. In the cooling pipes 5 a cooling medium circulates which leads away the heat. The cooling medium is preferably a liquid or a gas. The heat, which is removed from the energy storage cell by means of the circulating cooling medium is preferably made available for a secondary use. The cooling pipes 5 can e.g. be part of a heat exchanging device. Alternatively or additionally to the cooling pipes cooling fins can be attached the bottom of the cell case (not shown). For cooling the cooling fins a forced convection of a gas is provided. The cooling fins and cooling pipes are preferably made of a highly thermo-conducting material, as e.g. metal, particularly copper or aluminium. The cooling fins respectively the cooling pipes are preferably welded onto the cell case bottom 4b.

During the charge and discharge of the energy storage cell 1 an exchange of sodium 11 between the anode compartment 14 and the cathode compartment occurs, so that the pressure in these compartments is variable with the charge state. The solid beta double prime-alumina of the separator 23 is designed for resisting to such pressure differences, so that the total cathode volume remains constant.

The free volume within the compartment 15 of the cell case 2 above the cell case sub-compartments 15.1...15.3 is filled with inert gas 9. The cell case 2 further contains a gas port 6, e.g. an inlet/outlet port, preferably provided in the cell case wall 4a or cell case top lid 3 to supply inert gas 9 into the compartment 15 of the cell case 2 after closing and sealing the cell case 2 with the cell case top lid 3.

If the amount of inert gas 9 within the compartment 15 of the cell case 2 shall be kept constant during the operation of the energy storage cell 1, the inlet port 6 is preferably connected to a pressure gauge 60 (see figure 7a).

If the pressure of the inert gas 9 within the compartment 15 of the cell case 2 shall be kept constant, the inlet port 6 is preferably connected to a separate inert gas buffer volume storage 61. In this case means 62 for measuring the mass flow of inert gas 9 between the inert gas buffer volume storage 61 and the compartment 15 of the cell case 2 are provided (see figure 7b).

The pressure of the inert gas or the inert gas volume are in a defined relationship to the quantity of the sodium in the cell case compartments 15.1...15.3 and this way can be used for calculating the cell charge state.

The cathode unit 20 according to figure 2 comprises a cathode current collector 21 which is embedded, i.e. integrated in the solid, porous cathode matrix 22. The cathode matrix 22 contains FeCl₂ and/or NiCl₂ The solid cathode matrix 22 is encased by the solid separator 23, which consists of beta double prime alumina. The solid cathode matrix 22 houses a molten salt NaAlCl₄ as a secondary electrolyte. The dissociated ions Na⁺ and AlCl₄⁻ provides the conduction of Na⁺ between the inner surface of the separator 23 and the reaction point inside the solid porous Fe/NiCl₂ cathode 22. The cathode current collector 21 is connected to a cathode bus bar 7 via a fuse 28 as already described above.

The tube-shaped separator 23 is joined at its upper, open, ring-shaped end to a base part of a sealing ring 29 made of alpha-alumina by means of a circumferential glass joint 30. Further, a metal ring 32 is joined at its lower end part to the upper end part of the sealing ring 29 by means of a circumferential glass joint 31 as well. Instead of a glass brazed seal 31 also a metal brazed seal can be applied for the joining between the sealing ring 29 and the metal ring 32. On the upper end part of the metal ring 32 a cathode unit top lid 27 made of metal is welded, so that the cathode unit 20, i.e. the cavity containing the cathode, is completely sealed. Hence, the cathode unit 20, and particularly the cathode 22 is hermetically sealed off against the environment.

The cathode matrix 22 is preferably pre-fabricated. The fabrication process can be a moulding process, a squeeze moulding process or a sintering process. The cathode current collector 21 is also pre-fabricated and forms together with the fuse 28 and the cathode unit top lid 27 a first subassembly. This first subassembly comprising the cathode current collector 21, the fuse 28 and the cathode unit top lid 27 (both are attached to the cathode current collector 21) is integrated in the cathode matrix 22 during the production process. The cathode matrix 22 now forms together with the first subassembly and the secondary electrolyte 26 in the cathode matrix 22 a second subassembly.

The tube-shaped separator 23 forms together with the sealing ring 29 and the metal ring 32 which are joined to the separator 23 respectively to the sealing ring 29 accordingly a third subassembly. The pre-fabricated second subassembly is now inserted into the cavity of the tube-shaped separator 23 of the third subassembly and subsequently sealed. For this purpose the two subassemblies are joined by means of a circumferential assembly weld between the cathode unit top lid 27 and the metal ring 32 to form a cathode unit 20 assembly. Alternatively, the ring parts 29, 32 of the third subassembly can also be fixed during the assembling of the cathode unit 20 assembly.

Hence, the cathode unit 20 is a prefabricated assembly comprising the cathode matrix 22 with the secondary electrolyte 26 and the integrated cathode current collector 21 and the tube-shaped separator 23 in whose cavity the solid cathode matrix 22 with the cathode current collector 21 is inserted. Furthermore, the prefabricated cathode unit 20 assembly is sealed at its upper end with a sealing ring 29, a metal ring 32 and a cathode unit top lid 27 as described above. The cathode current collector 21 is lead through the cathode unit top lid 27 and passes the fuse 28, which is also part of the cathode unit 20 assembly.

The prefabricated cathode unit 20 assembly is now inserted into the cavity of the anode current collector casing 12. No other means for the compensation of the different thermal expansion of the separator and the anode current collector casing 12 or the cell case 2 are required. After the disk-shaped cathode bus bar 7 is joined to the connections 34 of the fuses 28 and to the external plus pole 42 via the lead through 8, the cell case top lid 3 can be closed and the inert gas 9 is filled into the compartment 15 of the energy storage cell 1 via the inert gas port 6 prior to the first charge, which will generate the anode sodium 11.

Fig. 5 shows an arrangement 50 of a plurality of energy storage cells 1.1 ... 1.X according to the invention, which are connected in series using simple connection lines 44 to connect the minus pole 41 of a first cell 1.1 with the plus pole 42 of a second cell 1.2, which preferably neighbours the first cell 1.1. The energy storage cells 1.1...1.X can be stacked above each other to form piles. The arrangement can comprise a plurality of such piles arranged next to each other. The cell cases 2 of a pile of cells 1.1...1.2 are separated and electrical isolated from each other by means of isolation studs which can e.g. be attached to the bottom 4 of the cell cases 2 or can be loosely introduced between two cell cases 2. With such an arrangement 50 high DC voltages can be generated.

While the invention has been described in present preferred embodiments of the invention, it is distinctly understood that the invention is not limited thereto, but may be otherwise variously embodied and practised within the scope of the claims.

### LIST OF DESIGNATIONS

- 1: Energy storage cell
- 1.1: Energy storage cell with a round cell case
- 1.2: Energy storage cell with a hexagonal cell case
- 2: Cell case
- 2.1: Round cell case
- 2.2: Hexagonal cell case
- 3: Cell case lid
- 4a: Cell case wall
- 4b: Cell case bottom
- 5: Cooling pipes
- 6: Inert gas port
- 7: Cathode bus bar
- 8: Isolated current lead through
- 9: Inert gas fill in the cell case
- 10: Anode arrangement
- 11: Molten anode / Anode material / Molten alkali metal anode
- 12: Anode current collector
- 13: Anode bus bar
- 14: Anode compartment
- 15: Cell case compartment
- 15.1-15.2: Cell case sub-compartments
- 16: Wicking material, wettable by the alkali metal
- 17: passage through the anode current collector
- 18: Variable anode level in the cell case compartments
- 19: Anode level within the anode compartment
- 20: Cathode unit
- 21: Cathode current collector
- 22: Cathode
- 23: Separator
- 24: Active cathode substance
- 25: Active cathode substance upper level
- 26: Alkali metal aluminium halide molten salt secondary electrolyte
- 27: Cathode unit top lid
- 28: fuse
- 29: Sealing ring (Alpha alumina (α-alumina))
- 30: Glass joint between Beta prime-prime alumina (β"-alumina) and Alpha alumina (α-alumina) sealing ring
- 31: Glass joint between Alpha alumina (α-alumina) sealing ring and metal ring
- 32: Metal ring
- 33: Assembly weld
- 34: Fuse connection
- 40.1,40.2: Cell subunit consisting of a cathode unit and an anode current collector
- 41: Negative pole
- 42: Positive pole
- 43: Isolating stud between series connected cells
- 44: Series connection between cells
- 45: External positive pole connection
- 46: External negative pole connection
- 50: Arrangement of energy storage cells
- 60: Pressure gauge
- 61: Inert gas buffer volume storage
- 62: Gas volume measuring means
- 63: Sealing strip
- 64: Support

## Claims

1. A high temperature rechargeable electrochemical energy storage cell (1) comprising a cell case (2) which accommodates:
a. an anode arrangement (10) containing, at the operating temperature of the energy storage cell and when the energy storage cell is at least partially in a charged state, a molten alkali metal anode (11);
b. a cathode unit (20) containing at the operating temperature of the energy storage cell and when the energy storage cell is at least partially in a charged state:
● a cathode (22) which is electronically conductible;
● a cathode current collector (21) being electrically connected to the cathode (22);
● a separator (23) separating the anode (11) from the cathode (22), the separator (23) being a solid electrolyte and comprising a solid conductor of the ions of the alkali metal of the anode (11) or being a micro-molecular sieve which contains said alkali metal (11) adsorbed therein, and the separator (23) being non-conductive for electrons.
wherein
at least two cathode units (20) are assembled within the energy storage cell case (2) and the at least two cathode units (20) are in electrochemical contact with a shared molten anode (11) of the anode arrangement (10) via their separators (23).

2. An energy storage cell according to claim 1, wherein the anode arrangement (10) further comprises an anode current collector (12) casing for each of the at least two cathode units (20), wherein the anode current collector casing (12) features a cavity which accommodates a cathode unit (20), and wherein within the cavity an anode compartment (14) is formed between the anode current collector casing (12) and the cathode unit (20) accommodated in the cavity of the anode current collector casing (12).

3. An energy storage cell according to claim 2, wherein the separator (23) forms a cavity and is encasing a cathode compartment which accommodates the cathode (22) and the cathode current collector (21), and wherein the cavity of the anode current collector casing (12) is adapted to the shape of the cathode unit (20).

4. An energy storage cell according to one of the preceding claims 1 to 3, wherein the cathode units (20) are individually sealed, and wherein each of the cathode units (20) preferably contains a fuse (28) for interrupting the current flow through the cathode current collector (21) in case of a short-circuit, overload or failure of the corresponding cathode unit (20).

5. An energy storage cell according to claim 2, wherein the anode compartment (14) between the anode current collector casing (12) and the cathode unit (20) comprises a ring-shaped gap section, the ring-shaped gap section preferably forms a capillary gap, in which, under operational conditions of the energy storage cell (1), the molten anode material (11) rises against the gravitational force by means of capillary forces.

6. An energy storage cell according to one of the preceding claims 1 to 5, wherein the cathode unit (20) is a prefabricated assembly comprising a cathode current collector (21), a cathode (22) with an active cathode substance and optionally an alkali metal aluminum halide molten salt electrolyte (26), and further comprising a separator (23) encasing the cathode current collector (21) and the cathode (22).

7. An energy storage cell according to one of the preceding claims 1 to 6, wherein the bottom (4b) of the cell case (2) forms an anode bus bar (13), through which electric current is conducted from an external conductor to the anode current collectors (12) or is conducted from the anode current collectors (12) to an external conductor.

8. An energy storage cell according to one of the preceding claims 1 to 4, wherein means (5) for cooling the bottom (4b) of the cell case (2) are provided, and wherein the means (5) are preferably cooling pipes (5), in which a cooling fluid circulates, and which are attached in a thermally conductive manner to the outside of the bottom (4b) of the cell case (2) or wherein the means are cooling fins attached in a thermally conductive manner to the outside of the bottom of the cell case.

9. An energy storage cell according to one of the preceding claims 1 to 8, wherein the cell case (2) accommodates at least two anode current collector casings (12) with a cavity, each of which accommodates a cathode unit (20), whereas between the anode current collector casings (12) and/or between the anode current collector casings (12) and the cell case (2) at least one, preferably a plurality of independent and/or interconnected cell case sub-compartments (15.1...15.3) are formed, and the cell case sub-compartments (15.1...15.3) accommodate in an at least fully charged state of the energy storage cell (1) molten anode material (11), and wherein the anode current collector casings (12) contain passages (17) which connect the cell case sub-compartments (15.1...15.3) with the anode compartments (14).

10. An energy storage cell according to one of the preceding claims 1 to 9, wherein the free volume (15) above the molted anode material (11) within the cell case (2) is filled with inert gas (9), and preferably means are provided to measure the amount and/or the pressure of the inert gas (9) within the cell case (2) to calculate the charge state of the energy storage cell (1).

11. An energy storage cell according to one of the preceding claims 1 to 10, wherein the cathode current collectors (21) of the cathode units (20) are connected to a shared cathode bus bar (7) through which electric current is conducted from an external conductor to the cathode current collectors (21) or is conducted from the cathode current collectors (21) to an external conductor.

12. A cathode unit (20) for an energy storage cell (1) according to one of the preceding claims 1 to 12, wherein the cathode unit (20) is a prefabricated assembly comprising a cathode current collector (21), a cathode (22) with an active cathode substance and optionally an alkali metal aluminum halide molten salt electrolyte, and further comprising a separator (23) encasing the cathode current collector (21) and the cathode (22).

13. A cathode unit according to claim 12, wherein the separator (23) is formed as a casing with a cavity and a closed lower end, and the cavity accommodates the cathode (22) with the active cathode substance and optionally the alkali metal aluminum halide molten salt electrolyte and the cathode current collector (21) which is preferably integrated into the cathode (22), the separator casing (23) is preferably tube-shaped and the form of the cavity of the separator casing (23) preferably matches with the form of the cathode (22).

14. A method to determine the charge state of the energy storage cell (1) according to one of the claims 1 to 11, wherein the energy storage cell (1) comprises means (60, 62) for measuring the volume and/or the pressure of the inert gas (9) within the cell case (2) and further means are provided to calculate the charge state of the energy storage cell (1) from the measured inert gas volume and/or pressure within the cell case (2), wherein the level of the molten anode material (11) within the cell case (2), particularly within cell case compartments (15.1...15.3), is dependent on the charge state of the energy storage cell (1) and the volume and/or the pressure of the inert gas (9) within the cell case (2) is dependent on the level of the molten anode material (11), and thus the charge state of the energy storage cell (1) is indirectly determined by measuring the volume and/or pressure of the inert gas (9) within the cell case (2) and calculating the charge stage.

15. Use of an energy storage cell (1) according to one of the claims 1 to 11 in an electric power supply system, particularly as balancing reserve or buffer storage in order to response to imbalances between generation and consumption and/or to ensure grid stability in case of a fluctuating generation and/or consumption of electrical energy.
